(19) Europäisches Patentamt
European Patent Office
Office européen des brevets

(11) **EP 2 035 965 B1**

(12) **EUROPÄISCHE PATENTSCHRIFT**

(45) Veröffentlichungstag und Bekanntmachung des Hinweises auf die Patenterteilung:
**16.01.2013 Patentblatt 2013/03**

(21) Anmeldenummer: **07726055.2**

(22) Anmeldetag: **18.06.2007**

(51) Int Cl.:
***G06F 17/30*** *(2006.01)*

(86) Internationale Anmeldenummer:
**PCT/EP2007/005347**

(87) Internationale Veröffentlichungsnummer:
**WO 2007/144199 (21.12.2007 Gazette 2007/51)**

(54) **VERFAHREN ZUM AUTOMATISCHEN BEWERTEN DER ÄHNLICHKEIT VON ZWEI ZEICHENKETTEN, DIE IN EINEM COMPUTER GESPEICHERT SIND**

METHOD FOR AUTOMATICALLY VALUATING THE SIMILARITY OF TWO CHARACTER STRINGS WHICH ARE STORED IN A COMPUTER

PROCÉDÉ POUR L'ÉVALUATION AUTOMATIQUE DE LA SIMILITUDE DE DEUX CHAÎNES DE CARACTÈRES QUI SONT STOCKÉES DANS UN ORDINATEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **16.06.2006 DE 102006029072**

(43) Veröffentlichungstag der Anmeldung:
**18.03.2009 Patentblatt 2009/12**

(73) Patentinhaber: **Omikron Data Quality GmbH 75177 Pforzheim (DE)**

(72) Erfinder: **KARAYEL, Emin 75173 Pforzheim (DE)**

(74) Vertreter: **Reitstötter - Kinzebach Patentanwälte Sternwartstrasse 4 81679 München (DE)**

(56) Entgegenhaltungen:
**EP-A- 0 890 911**

• **BUSS S R AND YIANILOS P N: "A Bipartite Matching Approach to Approximate String Comparison and Search" TECH. REP., NEC RESEARCH INSTITUTE, [Online] 1995, XP002452856 Princeton NJ. Gefunden im Internet: URL:http://citeseer.ist.psu.edu/24239.html > [gefunden am 2007-09-20]**
• **HALL P A V ET AL: "APPROXIMATE STRING MATCHING" ACM COMPUTING SURVEYS, NEW YORK, NY, US, Bd. 12, Nr. 4, Dezember 1980 (1980-12), Seiten 381-402, XP000747617 ISSN: 0360-0300**
• **NAVARRO G: "A Guided Tour to Approximate String Matching" ACM COMPUTING SURVEYS, ACM, NEW YORK, NY, US, US, Bd. 33, Nr. 1, 1. März 2001 (2001-03-01), Seiten 31-88, XP002235679 ISSN: 0360-0300**
• **UKKONEN E: "Approximate string-matching with q-grams and maximal matches" THEORETICAL COMPUTER SCIENCE, AMSTERDAM, NL, Bd. 92, Nr. 1, 6. Januar 1992 (1992-01-06), Seiten 191-211, XP002388330 ISSN: 0304-3975**

**Beschreibung**

Die Erfindung betrifft ein Verfahren zum Bewerten der Ähnlichkeit von zwei Zeichenketten. Insbesondere betrifft die Erfindung ein rechnergestützes Verfahren zum automatischen Bewerten der Ähnlichkeit von zwei Zeichenketten, die in einem Computer gespeichert sind oder auf die der Computer über eine Schnittstelle Zugriff hat.

Die Aufgabe, Zeichenketten miteinander zu vergleichen und ihre Ähnlichkeit zu bewerten, stellt sich z. B. bei der Untersuchung von Nukleinsäuresequenzen. Wurde z. B. das genetische Material eines Krankheitserregers ganz oder mindestens teilweise entschlüsselt, ist es von Bedeutung, herauszufinden, ob es dieselbe oder ähnliche Gensequenzen bzw. Nukleinsäuresequenzen auch schon bei früher untersuchten Erregern gegeben hat. Da Erreger häufig mutieren, ist es von besonderer Bedeutung, ähnliche Erreger und den Grad ihrer Ähnlichkeit herauszufinden. Das ist insbesondere bei schnell mutierenden Krankheitserregern, wie z. B. bei Grippeerregern, von besonderer Bedeutung.

Die Aufgabe, Zeichenketten miteinander zu vergleichen und ihre Ähnlichkeit zu bewerten, stellt sich darüber hinaus bei der Suche von Begriffen in einem Text, um aus einer Vielzahl von Dokumenten eines oder mehrere spezifische Dokumente auszuwählen.

Die Aufgabe stellt sich z. B. auch beim Überprüfen, ob sich ein bestimmter Name oder eine bestimmte Adresse in einer größeren Namensdatei bzw. Adressendatei befindet, z. B. in der Kundenliste eines Unternehmens. Die Aufgabe stellt sich schließlich z. B. im Bereich der Lagerhaltung und Logistik, wenn es darum geht festzustellen, ob sich ein bestimmter Artikel im Angebot oder im Lagerbestand befindet und/oder ob sich gleiche Objekte unter verschiedenen, aber ähnlichen, Bezeichnungen im Angebot oder im Bestand eines oder mehrerer Läger befinden. Die Aufgabe stellt sich allgemein, wenn es darum geht, festzustellen, ob sich ein bestimmter Datensatz, der sich als eine Zeichenkette darstellen lässt, in einer größeren Datenmenge befindet, welche in einem Computer gespeichert ist, z. B. in einer Datenbank.

Dabei besteht die Forderung, dass das Verfahren nicht nur identische Zeichenketten auffindet, wie es im Bereich der Lagerhaltung und Logistik gefordert wird, sondern auch ähnliche Zeichenketten auffindet, da z. B. Namen und Adressen in unterschiedlicher Schreibweise oder fehlerhaft geschrieben vorliegen können.

Aus der EP 0 890 911 A2 ist ein mehrstufiges Verfahren zum Vergleich von Zeichenketten bekannt. Dabei gehört eine Zeichenkette beispielsweise zu einer Suchanfrage und die andere Zeichenkette ist in einer Datenbank enthalten. Bei dem Verfahren werden in einer ersten Stufe nur die Häufigkeiten von Textfragmenten berücksichtigt. In einer zweiten Stufe wird die Position der Fragmente berücksichtigt und eine grobe Näherung der richtigen Anordnung zwischen der Suchanfrage und den Wörtern der Datenbank berücksichtigt. In einer dritten Stufe wird dann eine bessere Näherung der Anordnung bereitgestellt. Schließlich wird eine Liste mit vorgeschlagenen Datenbankeinträgen ausgegeben, welche nach ihrer Ähnlichkeit mit der Suchanfrage geordnet sind.

Aus der EP 0 271 664 A1 ist ein Verfahren bekannt, bei welchem die Anzahl der Schritte bestimmt wird, die erforderlich ist, um eine Zeichenkette in eine andere Zeichenkette zu überführen. Dabei wird in einem Schritt entweder ein Zeichen eingefügt, entfernt oder ersetzt. Die Anzahl der Schritte wird auf die Länge der Zeichenkette normiert, um eine Maßzahl für die Ähnlichkeit bzw. Unähnlichkeit der beiden Zeichenketten zu gewinnen. Wird eine bestimmte Zeichenkette aufeinander folgend mit mehreren Zeichenketten verglichen, kann auf diese Weise eine Rangliste bezüglich der Ähnlichkeit oder Nichtähnlichkeit aufgestellt werden.

Aus der EP 0 639 814 B1 ist es bekannt, beim Vergleich von zwei Zeichenketten nach einem vorgegebenen Regelwerk Unterschiede zu ermitteln, diesen Unterschieden einen Zahlenwert zuzuordnen, die verschiedenen Zahlenwerte zu gewichten und gewichtet zu addieren. Dadurch ergibt sich ein Zahlenwert, der ein Maß für die Unähnlichkeit der beiden Zeichenketten ist. Wird eine Zeichenkette mit mehreren anderen Zeichenketten verglichen, erhält man eine Anzahl von solchen Unähnlichkeitswerten, die in einer Rangliste zusammengefasst werden können.

Nachteilig bei den bekannten Verfahren ist, dass sie zu ungenau sind. Sie berücksichtigen z. B. keine Vertauschungen wie Hans Müller und Müller Hans.

Der vorliegenden Erfindung liegt die Aufgabe zugrunde, ein Verfahren zum Bewerten der Ähnlichkeit von zwei Zeichenketten anzugeben, welche in einem Computer gespeichert sind oder auf welche der Computer über eine Schnittstelle Zugriff hat; das Verfahren soll sich automatisch durchführen lassen und genauere Ergebnisse liefern als der Stand der Technik, wie er durch die EP 0 271 664 A1 und durch die EP 0 639 814 B1 offenbart ist.

Diese Aufgabe wird gelöst durch ein Verfahren mit den im Patentanspruch 1 oder 2 angegebenen Merkmalen. Vorteilhafte Weiterbildungen der Erfindung sind Gegenstand der Unteransprüche.

Erfindungsgemäß werden zwei Zeichenketten miteinander verglichen, indem zunächst die in den Zeichenketten vorhandenen Assoziationen ermittelt werden. Die Assoziationen werden sodann bewertet. Die Bewertung erfolgt nach einer ersten Regel, die in dem Computer gespeichert ist. Zu diesem Zweck kann man den Assoziationen jeweils z. B. einen Zahlenwert zuordnen. Assoziationen, die zusammenhängen, d. h. eine Kette von Assoziationen bilden, werden für die Ähnlichkeit der beiden zu vergleichenden Zeichenketten höher bewertet als nicht zusammenhängende Assoziationen. Aus dem Wert der einzelnen Assoziationen wird nach einer im Computer gespeicherten zweiten Regel als Maß für die Ähnlichkeit der beiden Zeichenketten ein Gesamtwert gebildet.

Im einfachsten Fall der zweiten Bewertungsregel werden die Zahlenwerte der einzelnen Assoziationen summiert. Die Summe ist dann ein Maß für die Ähnlichkeit der Zeichenketten. Um unterschiedliche Ähnlichkeiten miteinander vergleichen zu können, wird die Summe der Werte vorzugsweise so normiert, dass sie bei übereinstimmenden Zeichenketten einen festen Wert erhält, vorzugsweise den Wert 1, wohingegen bei voneinander abweichenden Zeichenketten die normierte Ähnlichkeit Werte zwischen 0 und 1 annimmt.

Der Wert, der ein Maß für die Ähnlichkeit der beiden Zeichenketten ist, kann im Computer gespeichert und/oder vom Computer ausgegeben werden. Im Allgemeinen wird eine Zeichenkette nicht nur mit einer einzigen Zeichenkette zu vergleichen sein, sondern aufeinanderfolgend mit einer ganzen Reihe von Zeichenketten. In diesem Fall können die Werte, insbesondere die Zahlenwerte, die ein Maß für die Ähnlichkeit von je zwei Zeichenketten sind, tabellarisch nach dem Grad der Ähnlichkeit sortiert und gespeichert und/oder ausgegeben werden. Es ist auch möglich und in vielen Fällen ausreichend und übersichtlicher, nicht alle Ergebnisse auszugeben, sondern nur jene Zeichenketten auszugeben, z. B. auszudrucken oder auf einem Bildschirm darzustellen, bei welchen der Wert, insbesondere der Zahlenwert der Ähnlichkeit einen vorgegebenen Schwellenwert übersteigt.

Die ermittelten Werte der Ähnlichkeit können auf unterschiedliche Weise weiterverarbeitet werden. So können die Zeichenketten, bei denen der Zahlenwert der Ähnlichkeit einen vorgegebenen Schwellenwert übersteigt, manuell ausgewertet werden. Es ist aber auch möglich, dass der Computer, der die Bewertung vorgenommen hat, mit den Zeichenketten, bei denen der Zahlenwert der Ähnlichkeit einen Schwellenwert überschreitet, automatisch weitere Schritte durchführt, z. B. die ähnlichen Zeichenketten so behandelt, als ob sie inhaltsgleich wären, so genannte Doubletten. Der Computer kann dann z. B. eine Datenbank, in welcher die aufgefundenen Doubletten enthalten sind, von den inhaltlich doppelt vorhandenen Zeichenketten befreien, so dass die Datenbank keine Doubletten mehr enthält.

Weitere Anwendungsbeispiele der Erfindung werden weiter unten noch erläutert.

Anstelle von Abweichungen zwischen den Zeichenketten stellt das erfindungsgemäße Verfahren die Übereinstimmungen zwischen je zwei Zeichenketten fest und wertet sie aus. Durch die Bewertung von Assoziationen können Übereinstimmungen, die für die Ähnlichkeit von besonderer Bedeutung sind, mit stärkerem Gewicht berücksichtigt werden. Insbesondere werden Assoziationsketten höher bewertet als eine isolierte Übereinstimmung in einzelnen Zeichen, weil letztere vielleicht lediglich zufällig besteht. Durch Anwendung der Erfindung erreicht man aussagekräftigere Ergebnisse als mit Verfahren, die als Stand der Technik offenbart sind.

Unter einem Zeichen wird ein Schriftzeichen, eine Ziffer oder ein Symbol eines Zeichensatzes einer Sprache verstanden. Insbesondere wird unter einem Zeichen ein Graphem im Sinne des Unicode-Standards, welcher zum Beispiel in der Literaturstelle [1] erläutert ist (siehe Unicode Standard Annex #29) bzw. der ISO 10646 verstanden. Als Zeichen gelten auch Sonderzeichen, Steuerzeichen, Interpunktionen und Leerzeichen.

Unter einer Zeichenkette wird eine Folge von Zeichen verstanden. Eine Zeichenkette kann aus einer Folge von Worten und Zahlen bestehen, wie es bei Namen und Adressen der Fall ist.

Ein Datensatz enthält mindestens eine Zeichenkette und kann weitere Daten enthalten, welche der Zeichenkette zugeordnet sind und insbesondere in einem inneren Zusammenhang mit der Zeichenkette stehen, z. B. in einem Sinnzusammenhang. Ein bevorzugtes Beispiel für einen Datensatz ist der Inhalt einer Zeile einer Tabelle.

Eine Datenmenge enthält mehrere Datensätze. Ein bevorzugtes Beispiel für eine Datenmenge ist eine Datenbank.

Unter einer Teilzeichenkette wird ein Teil einer Zeichenkette verstanden, der aus einem einzelnen Zeichen oder aus unmittelbar aufeinander folgenden Zeichen besteht.

Unter einer Assoziation wird ein sinnvoll nicht mehr weiter zerlegbares Paar von Teilzeichenketten verstanden, die in beiden zu vergleichenden Zeichenketten auftreten. Ein Buchstabe, der in beiden Zeichenketten vorkommt, bildet eine Assoziation. Eine Assoziation bilden auch phonetisch übereinstimmende, aber unterschiedlich geschriebene Laute wie "ä" und "ae" oder wie "sch" und "sh", wenn der eine Laut (z. B. ä) in der einen Zeichenkette und der andere phonetisch übereinstimmende Laut (z. B. ae) in der anderen Zeichenkette auftritt. Als Assoziationen gelten auch Synonyme und Abkürzungen, die mit übereinstimmender Bedeutung in den beiden zu vergleichenden Zeichenketten vorkommen, z. B. Samstag und Sonnabend, Nr. und No. , Straße und Str.. Entsprechend der vorstehenden Definition wird in dem Computer eine Vorschrift gespeichert, nach welcher der Computer je zwei Zeichenketten miteinander vergleicht infolge des Vergleiches und die in den Zeichenketten vorhandenen Assoziationen im Sinne der vorstehenden Definition findet.

Zwei Assoziationen hängen zusammen, wenn in beiden zu vergleichenden Zeichenketten die eine Assoziation dort endet, wo die nächste Assoziation beginnt. Positionspaare, an welchen eine Assoziation endet und die nächste Assoziation beginnt, werden als Brückenpositionen bezeichnet. Zusammenhängende Assoziationen bilden eine Assoziationskette.

Unter einem Fragment wird eine jede Assoziation und jede beliebige Assoziationskette in zwei zu vergleichenden Zeichenketten verstanden. Da Fragmente beliebig lang oder kurz sein können, stellt auch eine Assoziation, welche lediglich aus zwei einzelnen übereinstimmenden Zeichen besteht, ein Fragment dar. Beispiel: Enthalten zwei zu vergleichende Zeichenketten übereinstimmend die Assoziationskette "ein", dann lassen sich daraus folgende sechs Fragmente bilden:

| | | |
|---|---|---|
| "e" | - | "e" |
| "i" | - | "i" |
| "n" | - | "n" |
| "ei" | - | "ei" |
| "in" | - | "in" |
| "ein" | - | "ein". |

Unter der <u>Ähnlichkeit von Assoziationen</u> wird für die jeweilige Assoziation ein vorgegebener Zahlenwert aus einem vorgegebenen Wertebereich verstanden, zweckmäßigerweise aus dem Wertebereich von 0 (keinerlei Ähnlichkeit) bis 1 (Identität).

Unter der <u>Position</u> eines Zeichens wird seine Stellung innerhalb einer Zeichenkette verstanden. Die in einer Zeichenkette vorhandenen Positionen werden zweckmäßigerweise fortlaufend durchnummeriert, sodass für jedes Zeichen einer Zeichenkette eine <u>Positionsnummer</u> seine Position in der Zeichenkette eindeutig angibt. Für die Ermittlung der Ähnlichkeit zweier Zeichenketten werden die vorhandenen Fragmente den Positionen zugeordnet, welche die die Fragmente bildenden Zeichen in den beiden Zeichenketten einnehmen.

Das <u>Gewicht einer Position</u> ist eine Wertzahl, welche einer Position zugeordnet wird. Wie gewichtet wird, ist vorzugsweise Bestandteil der im Computer gespeicherten Bewertungsregel. Durch das Gewicht einer Position kann zum Ausdruck gebracht werden, dass für die Ähnlichkeit zweier Zeichenketten die Übereinstimmung in manchen Positionen wichtiger ist als in anderen Positionen. Das Gewicht ist ein Maß für die Relevanz einer Position für die Ähnlichkeit. Im einfachsten Fall werden alle Positionen gleich gewichtet. Günstiger ist es jedoch, Positionen, die für die Ähnlichkeit bedeutender sind als andere Positionen, stärker zu gewichten. Das Gewicht kann von den Zeichen abhängen, welche sich an den Positionen befinden. Die Übereinstimmung in Zeichen wie z. B. "x" und "j" ist für die Bewertung der Ähnlichkeit zweier Zeichenketten wichtiger ist als die Übereinstimmung in anderen Zeichen wie z. B. "e" und "n". Das Gewicht einer Position kann davon abhängen, welche Zeichen sich auf den vorhergehenden und/oder auf den nachfolgenden Positionen einer Zeichenkette befinden, wobei den unmittelbar benachbarten Positionen für die Gewichtung eine besondere Bedeutung zukommt.

<u>Beispiel</u>:

In der Zeichenkette "Kunz und Kuhn" könnten die Zeichen "u", "n", sowie "d" in dem Wort "und" niedriger gewichtet werden als in der aus den Wörtern "Kunz" und "Kuhn" gebildeten Zeichenkette. Man kann jedoch auch eine zeichenspezifische Gewichtung einführen und diese beiden Gewichtungen miteinander multiplizieren. Leerzeichen und Interpunktionen werden z. B. am einfachsten mit 0 gewichtet. Dann spielt es keine Rolle, ob eine der beiden Zeichenketten mehr Leerzeichen enthält als die andere. Leerzeichen und Interpunktionen sind aber insofern für die Bewertung der Ähnlichkeit zweier Zeichenketten von Bedeutung, als der Wert von Assoziationen vorzugsweise von der Anordnung der Assoziationen in den Zeichenketten und damit von ihrer Lage in Bezug auf etwaige Leerzeichen und Interpunktionen in den Zeichenketten abhängig gemacht wird, insbesondere bei der Erkennung von Wortanfängen und Wortenden. Fragmente, welche den Beginn oder das Ende eines Wortes bilden, also am Anfang einer Zeichenkette, am Ende einer Zeichenkette oder unmittelbar neben einem Leerzeichen stehen oder zwischen zwei Leerzeichen stehen, werden für die Bewertung der Ähnlichkeit vorzugsweise höher gewichtet als andere Fragmente.

Die zur Anwendung kommenden Gewichte können aus Erfahrungswerten gebildet und im Computer in einer Datenbank abgelegt werden, auf welche der Computer beim Bewerten der Zeichenketten nach der gespeicherten Bewertungsregel zugreifen kann. Die Datenbank kann zum Beispiel für jedes Zeichen eines Zeichensatzes ein für das jeweilige Zeichen spezifisches Gewicht enthalten, wobei Zeichen wie "e" und "n" vorzugsweise unterdurchschnittlich gewichtet, Zeichen wie "q", "j" "x" und Sonderzeichen vorzugsweise überdurchschnittlich gewichtet und Leerzeichen z.B. mit Null gewichtet werden. Die Datenbank kann ferner für jedes Zeichen modifizierte Gewichte enthalten, die davon abhängen, welche Position das Zeichen in einer Zeichenkette hat und / oder welche Zeichen sich auf den benachbarten Positionen befinden, wobei insbesondere benachbarte Leerzeichen und Interpunktionen von Bedeutung sind. Die Datenbank kann auch Gewichte für Teilzeichenketten enthalten, die für die Ähnlichkeit zweier Zeichenketten meistens entweder weniger bedeutsam sind und deshalb unterdurchschnittlich gewichtet werden oder eine stärkere Bedeutung haben und deshalb überdurchschnittlich gewichtet werden, wobei geeignete Gewichte aus Erfahrungswerten oder durch Schätzung gewonnen sein können. Beispiele für weniger bedeutsame Teilzeichenketten sind "und", "en", "ein". Beispiele für bedeutsamere Teilzeichenketten sind "tz", "ax", "ck" oder "str".

Unter dem <u>Wert einer Assoziation</u> wird ihre gewichtete Ähnlichkeit in Bezug auf die zwei Zeichenketten verstanden, in welchen die Assoziation auftritt. Das Gewicht ist ein Faktor, mit welchem der Zahlenwert der Ähnlichkeit multipliziert wird. Besteht die Assoziation aus einer in beiden Zeichenketten auftretenden Zeichenfolge, dann werden

**4**

die Gewichte der Positionen, welche die assoziierte Zeichenfolge bilden, bevorzugt summiert. Der Wert der Assoziation ist in diesem Fall die mit der Summe der Gewichte der zur Assoziation gehörenden Positionen multiplizierte Ähnlichkeit der Assoziation.

Unter dem isolierten Wert eines Fragmentes wird die Summe der Werte seiner Assoziationen verstanden.

Unter dem angepassten Wert eines Fragmentes wird ein gegenüber dem isolierten Wert gegebenenfalls erhöhter oder verminderter Wert des Fragmentes verstanden, wobei die Erhöhung oder Verminderung von der Stellung des Fragmentes in der Zeichenkette abhängt.

Unter dem Gesamtgewicht wird die Summe der Gewichte der Positionen zweier zu vergleichender Zeichenketten verstanden.

Unter der Ähnlichkeit zweier Zeichenketten wird ein aus den Werten ihrer sich nicht überschneidenden Fragmente gebildeter Gesamtwert verstanden, vorzugsweise die Summe der angepassten Werte ihrer sich nicht überschneidenden Fragmente, vorzugsweise dividiert durch das Gesamtgewicht. Versteht man die Ähnlichkeit zweier Zeichenketten in dieser Weise, dann lässt sich das Bestimmen der Ähnlichkeit zweier Zeichenketten mathematisch als ein Mengenpackungsproblem (engl.: Weighted Set Packing Problem) auffassen, bei welchem es darum geht, in einer begrenzten Menge Teilmengen aufzusuchen, die sich nicht überschneiden. Insbesondere kann man das Bestimmen der Ähnlichkeit zweier Zeichenketten dann mathematisch als Lösung eines gewichteten Mengenpackungsproblems auffassen, bei welchem es darum geht, aus einer begrenzten Menge eine Auswahl von sich nicht überschneidenden Teilmengen mit größtem Gesamtgewicht zu finden. Angewendet auf die Bestimmung der Ähnlichkeit zweier Zeichenketten bedeutet das, dass es beim gewichteten Mengenpackungsproblem darum geht, aus der Menge der Fragmente, die sich mit den beiden Zeichenketten bilden lassen, eine Auswahl von sich nicht überschneidenden Fragmenten zu finden, die eine bestmögliche Wertzahl für die Ähnlichkeit der beiden Zeichenketten insgesamt ergeben. Dem Ziel dient besonders eine Ausgestaltung des erfindungsgemäßen Verfahrens, welche die Bildung längerer Fragmente vor der Bildung kürzerer Fragmente bevorzugt.

Im Allgemeinen kann das gewichtete Mengenpackungsproblem nur für sehr kleine Instanzen exakt gelöst werden, da der Aufwand für die mathematische Lösung des Problems exponentiell mit der Anzahl der möglichen Teilmengen wächst. Die Mathematik bietet dem Fachmann aber unterschiedliche Approximationsmöglichkeiten, mit denen er das Mengenpackungsproblem näherungsweise lösen kann:

Eine Möglichkeit besteht darin, Greedy Algorithmen anzuwenden. Diese fügen anhand einer Heuristik schrittweise neue Assoziationen hinzu. Zum Durchführen der vorliegenden Erfindung werden dabei am besten jene Assoziationen bevorzugt, die die längstmöglichen Fragmente bilden. Außerdem können Assoziationen bevorzugt werden, die am höchsten bewertet werden, insbesondere solche, die mit möglichst wenigen anderen Assoziationen konkurrieren.

Das Mengenpackungsproblem lässt sich mathematisch auch mit State-Space-Search-Algorithmen lösen. Das sind Verfahren, die die gesamte Lösungsmenge durchgehen, wobei bestimmte obere Abschätzungen vorgenommen werden, um Entscheidungs-Teilbäume wegzulassen; d. h., wenn eine aktuelle Lösung zu nichts besserem führen würde als die bereits beste gefundene Lösung, wird im Algorithmus zurückgesprungen und eine andere Variante ausprobiert. Um die Suche zu beschleunigen, kann man den Algorithmus auch so durchführen, dass bewusst eine Fehleinschätzung durchgeführt wird, indem mögliche bessere Lösungen ausgeschlossen werden, wenn es sich nur um geringfügig bessere Lösungen handelt. Diese Variante des State-Space-Search-Algorithmus liefert für die Ähnlichkeit ein Intervall, in welchem die exakte Lösung liegen muss. Mit den State-Space-Search-Algorithmen befassen sich die Literaturstellen [2], [4].

Schließlich lässt sich das gewichtete Mengenpackungsproblem durch das Weglassen der Integralitätsbedingung auch in ein lineares Optimierungsproblem - siehe die Literaturstelle [3] - überführen und z. B. durch Anwendung des Simplex Algorithmus - siehe auch die Literaturstellen [4], [5] - lösen. Diese Art der Approximation hat im Vergleich zu den oben aufgeführten Verfahren den Vorteil, dass die Ergebnisse sehr konsistent sind, d.h., dass Approximationsfehler keine unvorhersehbaren Ergebnisse liefern.

Auch Kombinationen der genannten mathematischen Verfahren sind möglich. Z. B. kann ein mit Hilfe eines Greedy Algorithmus gefundenes Ergebnis anschließend durch Anwendung eines Simplex Algorithmus verbessert werden.

Fragmenten kommt für die Ähnlichkeit zweier Zeichenketten ein besonders großes Gewicht zu, wenn Zeichenketten zwar nicht übereinstimmen, aber dasselbe bedeuten, z. B. bei Zeichenketten, welche sich lediglich durch Schreibfehler unterscheiden oder bei Zeichenketten, in denen lediglich die Reihenfolge von Worten vertauscht ist, z. B. die Reihenfolge von Name und Vorname vertauscht ist, oder Adressen, in welchen die Postleitzahl mal mit und mal ohne Länderkennzeichen geschrieben ist, oder ergänzend zu Strasse und Hausnummer ein Postfach angegeben ist.

Die Bevorzugung von zusammenhängenden Assoziationen vor nicht zusammenhängenden Assoziationen wird vorzugsweise so durchgeführt, dass die zu vergleichenden Zeichenketten für die Bewertung ihrer Ähnlichkeit aus möglichst wenigen Fragmenten und zum Rest aus Zeichen zusammengesetzt werden, aus welchen sich keine Assoziationen mehr bilden lassen. Insbesondere empfiehlt es sich, die zu vergleichenden Zeichenketten für die Bewertung ihrer Ähnlichkeit aus möglichst wenigen Assoziationsketten und zum Rest aus Assoziationen und aus Zeichen zusammen zu setzen, aus welchen sich keine Assoziationen mehr bilden lassen. Das ist eine gute Voraussetzung für das Durchführen der vorgenannten mathematischen Verfahren. Um diese durchzuführen, wird zweckmäßigerweise jeder Assoziation als Maß für die Ähnlichkeit ihrer assoziierten Bestandteile ein Zahlenwert zugeordnet, insbesondere ein solcher aus dem Wertebereich von 0 bis 1 oder von 0 bis 100 %. Dabei bedeutet der Wert "0", dass keinerlei Ähnlichkeit besteht, und der Wert "1" oder 100 % bedeutet Identität.

Vorzugsweise werden Assoziationen gemäß ihrer Bedeutung für die Ähnlichkeit von Zeichenketten gewichtet. Die Art der Gewichtung ist Bestandteil der im Computer gespeicherten Bewertungsregel. In vorteilhafter Weiterbildung der Erfindung wird die Bedeutung von Assoziationen für die Ähnlichkeit zweier Zeichenketten nach Erfahrungswerten gewichtet. Zeichen, die in unterschiedlichen Zeichensätzen die gleiche phonetische, symbolische oder inhaltliche Bedeutung haben oder haben können, werden als gleich oder ähnlich aufgefasst.

Die Bedeutung von Assoziationen für die Ähnlichkeit zweier Zeichenketten wird vorzugsweise anhand von im Computer bereits abgelegten Tabellen und/oder Berechnungsvorschriften ermittelt.

In vorteilhafter Weiterbildung des erfindungsgemäßen Verfahrens hängt das Gewicht, welches einem Fragment zugeordnet wird, von seiner Stellung in der Zeichenkette ab. Der Wert eines Fragments kann in Abhängigkeit von seiner Stellung in der Zeichenkette erhöht oder erniedrigt werden. In vorteilhafter Weiterbildung der Erfindung wird bei der Bewertung eines Fragments die Stellung des Fragmentes in der Zeichenkette durch einen Abzug vom Wert des Fragments oder durch einen Zuschlag zum Wert des Fragments berücksichtigt. Vorzugsweise erhalten Fragmente, die den Beginn oder das Ende eines Wortes bilden, ein höheres Gewicht als Fragmente, die in der Mitte eines Wortes auftreten und Fragmente, die einen Wortanfang bilden, werden vorzugsweise höher bewertet als Fragmente, die ein Wortende bilden.

Zeichen, die keiner Assoziation und keinem Fragment angehören, werden wegen ihrer fehlenden Ähnlichkeit mit anderen Zeichen der Zeichenkette zweckmäßigerweise mit "0" bewertet, können aber bei der Ermittlung des Gesamtgewichtes berücksichtigt werden. Tut man das, wird der Wert der Ähnlichkeit umso größer, je größer die Übereinstimmungen im Verhältnis zur Gesamtlänge der Zeichenkette sind. Berücksichtigt man die Zeichen, welche weder einer Assoziation noch einem Fragment angehören, bei der Bemessung des Gesamtgewichtes nicht, dann bestimmen die Übereinstimmungen in den beiden Zeichenketten den Zahlenwert der Ähnlichkeit stärker im Sinne einer höheren Ähnlichkeit. Das erleichtert es, zusammengesetzte Begriffe in ihrer Bedeutung als übereinstimmend zu erkennen, z. B. die Begriffe "Bürodrehstuhl" und "Bürostuhl". Es ist deshalb bevorzugt, Zeichen, die in zwei zu vergleichenden Zeichenketten weder einer Assoziation noch einem Fragment angehören, bei der Bestimmung des Gesamtgewichtes nur schwach oder gar nicht zu berücksichtigen.

Gewichte, Zuschläge zu und Abschläge von den Assoziationen und Fragmenten werden vorzugsweise nach Erfahrungswerten gebildet, wobei das Kriterium ist, ob man durch eine Änderung der Gewichte, Zuschläge und Abschläge sinnvollere Ergebnisse und/oder kürzere Rechenzeiten erreicht.

Zeichen, die in unterschiedlichen Zeichensätzen die gleiche phonetische, symbolische oder inhaltliche Bedeutung haben oder haben können, werden vorzugsweise als gleich oder ähnlich aufgefasst und ihre Position in der Zeichenkette entsprechend bewertet. In den Zeichenketten enthaltene Assoziationsketten werden zweckmäßigerweise unter Berücksichtung der Werte der in ihnen enthaltenen Assoziationen bewertet. Zweckmäßigerweise geht in die Bewertung einer Assoziationskette die Summe der Werte der in ihm vorhandenen Assoziationen ein. Dabei wird für eine Assoziation, die am Beginn oder am Ende einer Assoziationskette steht, vorzugsweise ein Abschlag bei der Bewertung vorgenommen. Dieser Abschlag wirkt sich für den Wert einer Assoziationskette um so stärker aus, je kürzer die Assoziationskette ist. Der Abschlag führt deshalb dazu, dass längere Assoziationsketten, wie es erfindungsgemäß gewollt ist, vor kürzeren Assoziationsketten und vor unverbundenen Assoziationen bevorzugt werden.

Weiterhin ist es bevorzugt, den Wert eines Fragmentes in Abhängigkeit von seiner Stellung in der Zeichenkette zu erhöhen oder zu erniedrigen. Ein Fragment, welches in wenigstens einer Zeichenkette einen Wortanfang oder ein Wortende bildet, wird als Anzeichen für die Ähnlichkeit der Zeichenketten vorzugsweise höher bewertet als ein Fragment, welches in den Zeichenketten weder einen Wortanfang noch ein Wortende bildet. Ferner werden Fragmente, die einen Wortanfang bilden, vorzugsweise höher bewertet als Fragmente, die ein Wortende bilden. Besonders hoch werden vorzugsweise solche Fragmente bewertet, welche in beiden Zeichenketten einen Wortanfang oder ein Wortende bilden, und zwar höher als Fragmente, welche in nur einer der Zeichenketten einen Wortanfang oder ein Wortende bilden. Die Erfahrung hat gezeigt, dass sich mit einer derartigen Bewertung, die die Stellung des Fragments in den Zeichenketten berücksichtigt, bessere Ergebnisse erzielen lassen.

Positionen von Zeichen, die keiner Assoziation und keinem Fragment angehören, werden zweckmäßigerweise mit "0" bewertet, denn sie tragen zur Ähnlichkeit nicht bei, sind aber bei der Bestimmung des Gesamtgewichtes zu berücksichtigen.

Als Zahlenwerte der Ähnlichkeit der Zeichenketten werden als Beispiel für die zweite Bewertungsregel vorzugsweise die Werte der nach Anspruch 3 oder nach Anspruch 4 bestimmten Fragmente bzw. Assoziationen und Assoziationsketten summiert und, um vergleichbare Aussagen zu erhalten, so normiert, dass sie bei übereinstimmenden Zeichenketten einen festen Wert, vorzugsweise den Wert 1 erhält. Vorzugsweise wird die Summe der Werte der Fragmente normiert, indem sie durch das Gesamtgewicht dividiert wird.

Die Erfindung ist nicht darauf beschränkt, Zeichenketten miteinander zu vergleichen, die aus Zeichen ein und desselben Zeichensatzes, z. B. dem deutschen Zeichensatz oder dem englischen Zeichensatz gebildet sind. Vorzugsweise werden Zeichen, die in unterschiedlichen Zeichensätzen die gleiche phonetische oder symbolische Bedeutung haben oder haben können, als gleich oder ähnlich aufgefasst. Zu diesem Zweck werden die Zeichen vorzugsweise in Unicode-Zeichen oder in Zeichen des Zeichensatzes gemäß ISO 10646 umgewandelt. Auf deren Grundlage können durch das erfindungsgemäße Verfahren Übereinstimmungen und Ähnlichkeiten zwischen beliebigen Zeichensätzen, z. B. Deutsch und Arabisch oder Englisch und Japanisch ermittelt werden.

Für das erfindungsgemäße Verfahren gibt es zahlreiche interessante Anwendungen:

Nach einer vorteilhaften Weiterbildung der Erfindung wird in einer ersten Datenmenge ein erster Datensatz, welcher eine erste von zwei Zeichenketten enthält, die einander nach einem vorgegebenen Kriterium ähnlich sind, um Daten aus einem zweiten Datensatz ergänzt, welcher die zweite der beiden ähnlichen Zeichenketten enthält und in einer zweiten Datenmenge enthalten ist. Bei den beiden Datenmengen kann es sich um Datenbanken handeln. In vorteilhafter Weiterbildung der Erfindung wird der erste Datensatz um Daten aus der zweiten Zeichenkette ergänzt, die in der ersten Zeichenkette nicht enthalten gewesen sind. Bei den Datensätzen kann es sich z. B. jeweils um den Inhalt einer Zeile einer Tabelle handeln. Die miteinander zu vergleichenden Zeichenketten können jeweils einen Datensatz bilden aber auch Teil eines Datensatzes sein, also z. B. Teil des Inhalts einer Zeile einer Tabelle. Die erste Datenmenge kann bei dieser Weiterbildung des Verfahrens automatisch mit Daten angereichert werden, die aus der zweiten Datenmenge, z. B. aus der zweiten Datenbank, stammen und in der ersten Datenmenge bisher nicht enthalten gewesen sind. Bei den Datenmengen kann es sich z. B. um Datenbanken handeln, die Kundenlisten enthalten. Die erste Datenbank enthält z. B. Namen und Anschriften von Kunden, die zweite Datenbank enthält z. B. Namen und Telefonnummern von Kunden. Durch das erfindungsgemäße Verfahren kann man bei Namen, die in den beiden Datenbanken übereinstimmend oder mit einem hohen Grad an Ähnlichkeit vorkommen, die Telefonnummern aus der zweiten Datenbank in die erste Datenbank überführen und diese vervollständigen, indem die Telefonnummern zu den passenden Namen in die entsprechenden Datensätze in der ersten Datenbank übernommen werden. Die Ähnlichkeitssuche kann z. B. nach Namen und Vornamen und/oder nach Firmenbezeichnungen durchgeführt werden. Diese bilden dann die Zeichenketten, die miteinander verglichen werden.

Eine andere Weiterbildung des erfindungsgemäßen Verfahrens betrifft ein Verfahren, in welchem eine erste Datenmenge oder ein erster Datensatz und eine zweite Datenmenge bzw. ein zweiter Datensatz in Zeichenketten zerlegt werden; die Zeichenketten der ersten Datenmenge bzw. des ersten Datensatzes und die Zeichenketten der zweiten Datenmenge bzw. des zweiten Datensatzes werden paarweise miteinander verglichen, um Zeichenketten aufzufinden, die einander nach einem vorgegebenen Kriterium ähnlich sind; schließlich werden Zeichenketten der zweiten Datenmenge, die mit keiner der Zeichenketten der ersten Datenmenge nach dem vorgegebenen Kriterium ähnlich sind, oder Datensätze, die Zeichenketten enthalten, die mit keiner der Zeichenketten der ersten Datenmenge nach dem vorgegebenen Kriterium ähnlich sind, in die erste Datenmenge aufgenommen. Auf die Weise lassen sich unterschiedliche Datenmengen oder Datensätze zusammenführen, ohne dass nach der Zusammenführung Doubletten in der zusammengeführten Datenmenge enthalten sind. Ein erstes Beispiel für ein solches Verfahren ist das automatische Zusammenführen von computerisierten Kundendateien beim Zusammenschließen von zwei Unternehmen. Eine weitere Anwendung für diese Weiterbildung des Verfahrens ist das automatische Zusammenführen von unterschiedlichen Lagerbeständen von Waren in einem gemeinsamen Lager. Diese Aufgabe stellt sich beim Zusammenschließen von zwei Unternehmen oder beim Zusammenlegen von zwei unterschiedlichen Standorten eines Unternehmens. Dabei muss damit gerechnet werden, dass die unterschiedlichen Läger gleiche Waren unter unterschiedlichen, aber ähnlichen Bezeichnungen aufführen und dass sich die Art der Waren in den beiden Lägern nur teilweise überschneidet, so dass wenigstens ein Lager Waren enthält, die im anderen Lager nicht geführt sind oder geführt wurden. Durch Anwendung des erfindungsgemäßen Verfahrens gelingt es ohne aufwendige manuelle Inventur der Läger die Lagerbestände zu erfassen, gleiche, aber unterschiedlich bezeichnete Waren aufzuspüren und in einem neuen, einheitlichen Lager so zusammenzuführen, dass gleiche Waren nicht unter unterschiedlichen Bezeichnungen an unterschiedlichen Plätzen des Lagers gelagert werden. Dabei kann das Verfahren so ausgeführt werden, dass entweder übereinstimmende oder als ähnlich erkannte Zeichenketten in die erste Datenmenge aufgenommen werden oder dass komplette Datensätze, die als einander ähnlich erkannte Zeichenketten enthalten, in die erste Datenmenge aufgenommen werden.

Dabei kann zugleich eine Anreicherung oder Ergänzung der ersten Datenmenge bzw. der ersten Datensätze mit bzw. um Daten aus der zweiten Datenmenge bzw. aus dem zweiten Datensatz erfolgen, wie es in dem Anspruch 17 angegeben ist.

Eine weitere vorteilhafte Weiterbildung des Verfahrens besteht darin, dass man zwei Zeichenketten einer Datenmenge, die nach einem vorgegebenen Kriterium als einander ähnlich bewertet worden sind, eine Zeichenkette aus der Datenmenge entfernt wird. Auf diese Weise lassen sich aus einer vorhandenen Datenmenge, z. B. aus einer Datenbank, doppelt vorhandene Einträge (Doubletten) automatisch entfernen, und zwar auch dann, wenn sie nicht identisch eingetragen sind, aber doch mit einem so hohen Grad an Übereinstimmung, dass man mit hoher Wahrscheinlichkeit davon ausgehen kann, dass es sich trotz der Verschiedenheit der Einträge in der Datenmenge um inhaltlich gleiche Einträge handelt. Eine hinreichend hohe Wahrscheinlichkeit kann man dadurch sicherstellen, dass für den Grad der Ähnlichkeit bzw. für den Grad der Übereinstimmung ein entsprechend hoher Schwellenwert festgelegt wird. Der Schwellenwert kann aus Erfahrung gewonnen werden. Das Entfernen der Doubletten kann von dem Computer automatisch durchgeführt werden. Es ist aber auch möglich, durch das erfindungsgemäße Verfahren zunächst eine Liste von möglichen Doubletten zu erzeugen, d. h. von Zeichenketten, bei denen der Zahlenwert der Ähnlichkeit einen vorgegebenen Schwellenwert übersteigt. Das Festlegen, bei welchen Einträgen in der Liste es sich dann tatsächlich um eine Doublette handelt, kann von Fall zu Fall oder nach Bedarf erfolgen. Wichtig ist, dass der Computer mit dem Erstellen der Liste der infrage kommenden Doubletten den weitaus größten Anteil der Arbeit für das Auffinden der Doubletten bereits geleistet hat, indem er aus der riesigen Zahl der zu vergleichenden Zeichenketten jene wenigen extrahiert und in einer Liste zusammengeführt hat, die als Doubletten ernsthaft infrage kommen.

Das vorstehend geschilderte Verfahren zum Auffinden möglicher Doubletten kann nicht nur so ausgeführt werden, dass eine als Doublette bewertete Zeichenkette aus der Datenmenge entfernt wird, sondern auch so, dass von zwei Datensätzen einer Datenmenge, die jeweils eine Zeichenkette enthalten, die nach einem vorgegebenen Kriterium als einander ähnlich bewertet worden sind, ein kompletter Datensatz, z. B. der Inhalt einer Zeile einer Tabelle, welche die als Doublette bewertete Zeichenkette enthält, aus der Datenmenge entfernt wird. Das Verfahren zum Auffinden und Beseitigen von Doubletten kann in Weiterbildung der Erfindung iterativ solange wiederholt werden, bis die untersuchte Datenmenge keine zwei Zeichenketten mehr enthält, die einander nach dem vorgegebenen Kriterium ähnlich sind. Auf diese Weise ist eine automatische und vollständige Doublettenbeseitigung möglich. Eine vorteilhafte Weiterbildung dieses Verfahrens zum Beseitigen von Doubletten besteht darin, dass von zwei Datensätzen, welche Zeichenketten enthalten, die einander nach dem vorgegebenen Kriterium ähnlich sind, der erste der beiden Datensätze um Daten aus dem zweiten Datensatz ergänzt wird, die in dem ersten Datensatz nicht enthalten gewesen sind. Erst danach wird der zweite Datensatz aus der Datenmenge entfernt. Das hat den Vorteil, dass keinerlei Datenverlust auftritt, sondern dass der erste Datensatz um Daten des zweiten Datensatzes angereichert wird, die im ersten Datensatz bisher nicht vorhanden gewesen sind.

Besonders geeignet ist das erfindungsgemäße Verfahren zur fehlertoleranten Suche nach einer vorgegebenen Zeichenkette oder nach einem Datensatz, der die vorgegebene Zeichenkette enthält, in einer größeren Datenmenge. Bei einer fehlertoleranten Suche soll eine in einer Datenmenge, insbesondere in einer Datenbank, vorhandene Zeichenkette auch dann gefunden werden, wenn sie nicht identisch, sondern mit einem Fehler behaftet, in den Computer eingegeben wird. Das Problem stellt sich z. B. dann, wenn man aus einem über das Internet zugänglichen Katalog online eine Ware bestellen will und die Warenbezeichnung nicht genau so eingibt, wie sie im Katalog verwendet wurde, aber ähnlich eingibt. In diesem Fall erlaubt es das erfindungsgemäße Verfahren, dennoch die richtige Ware aufzufinden. In diesem Fall handelt es sich bei der Zeichenkette bzw. bei dem Datensatz, der eine solche Zeichenkette enthält, um die Bezeichnung eines Gegenstandes, z. B. einer Ware, und bei der Datenmenge, in welcher die Bezeichnungen gesucht wird, um einen Katalog oder ein anderes Bestandsverzeichnis, welches in dem Computer gespeichert ist oder auf welches der Computer über eine Schnittstelle, z. B. über einen Internetzugang, Zugriff hat. Das Bestandsverzeichnis gibt den Bestand eines Warenlagers an, von welchem Waren für den Verkauf und/oder für den Vertrieb automatisch abgerufen werden können.

Das Verfahren eignet sich aber auch dafür, Fertigungsabläufe rationeller zu gestalten. In diesem Fall kann das Bestandsverzeichnis den Bestand eines Teilelagers in einem Unternehmen enthalten, von welchem Teile für Zwecke einer Fertigung abgerufen werden. In einer Varianten des Verfahrens kann durch Eingeben einer zumindest ähnlichen Bezeichnung des gewünschten Teiles in das Bestandsverzeichnis festgestellt werden, ob das gewünschte Teil am Lager vorhanden ist. In Weiterbildung des Verfahrens kann das Teil, wenn es vorhanden ist, für Zwecke der Fertigung abgerufen und vorzugsweise auch automatisch entnommen und in die Fertigungsstätte überführt werden.

Mit Vorteil kann das erfindungsgemäße Verfahren weiterhin eingesetzt werden, um das Erbgut von Organismen, insbesondere Mikroorganismen, deren Erbgut ganz oder teil-weise entschlüsselt wurde, mit dem Erbgut anderer Organismen zu vergleichen, um herauszufinden, ob verwandte Organismen existieren. Das ist von besonderer Bedeutung, wenn es um Krankheitserreger geht, die häufig mutieren, und erleichtert deren Einordnung und die Suche nach Gegenmitteln. In diesem Anwendungsfall kann man mit Hilfe der Erfindung Zeichenketten vergleichen, welche Gensequenzen oder Nukleinsäuresequenzen von Organismen, insbesondere von Mikroorganismen, darstellen.

Generell eignet sich die Erfindung besonders zu automatischen Datenpflege in Datenbanken.

Beispiel:

Die Erfindung soll nachfolgend am Vergleich der Zeichenketten "Bea Wax" und "B. Wachs" erläutert werden.

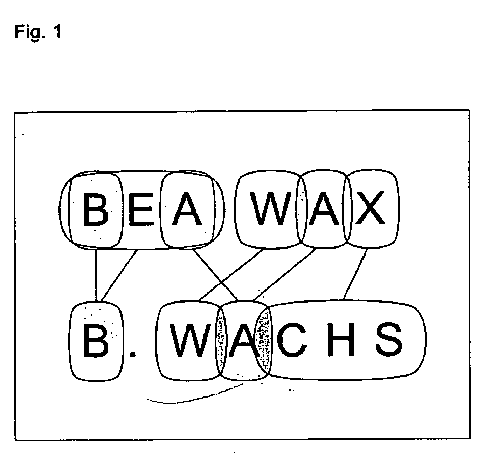

In der Figur 1 sind die in den beiden Zeichenketten vorhandenen Assoziationen abgebildet. Wir nehmen an, dass identische Zeichen die Ähnlichkeit 1 erhalten. *Die Zuordnung: "X" nach "CHS",* welche phonetisch gleich sein können, erhält nach der im Computer vorgegebenen Bewertungsregel z. B. die Ahnlichkeit 0,7. Die Zuordnung der *Abkürzung "B.",* welche Bea bedeuten könnte, nach "Bea" erhält z. B. die Ähnlichkeit 0,8. Zur Vereinfachung seien alle Zeichen, abgesehen von Interpunktionszeichen und Leerzeichen, die wir im Folgenden zur Vereinfachung überhaupt nicht betrachten, mit "1" gleich gewichtet.

Die Ähnlichkeit und die gewichtete Ähnlichkeit der vorhandenen Assoziationen sind in der nachstehenden Tabelle angegeben:

| Variable | Assoziation | Ähnlichkeit | Ähnlichkeit multipliziert mit dem Gewicht der Positionen |
|----------|-------------|-------------|----------------------------------------------------------|
| A1 | B - B | 1 | 2 * 1 = 2 |
| A2 | Bea - B | 0.8 | 4 * 0.8 = 3.2 |
| A3 | 1.A - A | 1 | 2 * 1 = 2 |
| A4 | W - W | 1 | 2 * 1 = 2 |
| A5 | 2. A - A | 1 | 2 * 1 = 2 |
| A6 | X - CHS | 0.7 | 4 * 0.7 = 2.8 |

Die Werte der Variablen A1 bis A6 bestimmen, in wie weit die zugehörige Assoziation für die Gesamtähnlichkeit betrachtet wird. Der Wert "0" bedeutet "gar nicht" und der Wert "1" bedeutet "vollständig".

In diesem Sinne lässt sich eine Zielfunktion als

$$Z = 2 * A1 + 3,2 * A2 + 2 * A3 + 2 * A4 + 2 * A5 + 2.8 * A6$$

definieren. Der höchste Ähnlichkeitswert ließe sich erreichen, wenn man alle Variablen auf den Wert "1" setzen würde. Aber es kommt noch die Randbedingung hinzu, dass Assoziationen sich nicht überschneiden sollen.

Beispielsweise überschneiden sich A1 und A2, da sie beide den ersten Buchstaben in der ersten Zeichenkette zuordnen. Um die Überschneidung zu vermeiden, muss entweder A1 = 0 oder A2 = 0 sein. Diese Bedingung approximieren wir durch die Ungleichung.

$$A1 + A2 <= 1$$

Hiermit sind viele Möglichkeit inbegriffen, z.B. dass A1 = 0,4 und A2 = 0,6 ist. Solche nicht ganzzahligen Werte zuzulassen ist gemeint, wenn oben im Zusammenhang mit der näherungsweisen Lösung des Mengenpackungsproblems von einem Weglassen der Integralitätsbedigung die Rede ist (engl. Linear Relaxation (siehe [3])).

Die Ungleichungen werden nach folgendem Schema ermittelt. Für jede Position, darf die Summe der Assoziationen, die diese Position zuordnen, den Wert "1" nicht überschreiten. Das ergibt die folgenden Ungleichungen zusammen mit der Zielfunktion Z:

$$A1 + A2 <= 1$$

$$A2 + A3 <= 1$$

$$A3 + A5 <= 1$$

$$A6 <= 1$$

$$A4 <= 1$$

$$Z = 2 * A1 + 3{,}2 * A2 + 2 * A3 + 2 * A4 + 2 * A5 + 2.8 * A6$$

Dabei haben wir redundante Ungleichungen weggelassen.

Die Assoziationen A2, A4, A5 und A6 bilden eine Assoziationskette.

Der Wert von Assoziationen, die den Anfang oder das Ende eines Fragmentes bilden, wird durch einen Abzug vermindert. Beispielsweise beginnt und endet die Assoziation A3 an einer Wortgrenze. Deswegen ziehen wir vom Wert der Assoziation A3 jeweils für Fragmentanfang und Fragmentende 0,5 ab; d.h., dass A3 in der Zielfunktion Z nur mit dem Wert "1" statt "2" gewichtet wird.

Bei der Assoziation A6 ist zu beachten, dass diese Assoziation zwar ein Fragmentende darstellt, aber unter Umständen kein Fragmentanfang ist, je nach dem Wert von A5. Deshalb werden in das Ungleichungssystem zusätzliche Variablen und Bedingungen eingefügt: Im Folgenden bezeichnen wir die Positionspaare, an denen Assoziationen anfangen und enden, als Brücken. Das Positionspaar, an dem A5 endet und A6 beginnt, ist dann (5,3). Insgesamt ergeben sich folgende Brücken B1 bis B3:

B1 (3,1)    (hier endet A2 und A4 fängt an)
B2 (4,2)    (hier endet A4 und A5 fängt an)
B3 (5,3)    (hier endet A5 und A6 fängt an)

Es kann vorkommen, dass an einer Brücke mehrere Assoziationen enden bzw. anfangen.

Die Summe der Brücken mit den Assoziationen, die an der Brücke anfangen oder enden, darf 1 nicht überschreiten, d. h.: Für jede Brücke B wird eine Ungleichung nach folgendem Schema eingefügt:

(Summe der Assoziationen, die an der Brücke B enden) + Wert der Brücke B < = 1 (Summe der Assoziationen, die an der Brücke B anfangen) + Wert der Brücke B < = 1.

Damit ergeben sich in unserem Fall die folgenden Ungleichungen:

$$B1 + A3 <= 1$$

$$B1 + A4 <= 1$$

$$B2 + A4 <= 1$$

$$B2 + A5 <= 1$$

$$B3 + A5 <= 1$$

$$B3 + A6 <= 1$$

Die Ungleichungen haben den Sinn, dass die jeweilige Brücke nur dann den Wert 1 erhält, wenn weder eine Assoziation an der jeweiligen Brücke endet noch eine Assoziation an dieser Brücke anfängt. Wir gewichten die Brücke in der Zielfunktion mit dem doppelten Wert des Fragmentabzuges, reduzieren jedoch den Gesamtwert der Zielfunktion konstant um diesen Wert. Zu den Assoziationen, die an der Brücke anfangen oder enden, wird der Fragmentabzug addiert, anstatt subtrahiert zu werden.

Zur Vereinfachung sei der Fragmentabzug immer 0,5.

Dann erhält man die folgenden Ungleichungen:

$$A1 + A2 <= 1$$

$$A2 + A3 <= 1$$

$$A3 + A5 <= 1$$

$$A6 <= 1$$

$$A4 <= 1$$

$$B1 + A3 <= 1$$

$$B1 + A4 <= 1$$

$$B2 + A4 <= 1$$

$$B2 + A5 <= 1$$

$$B3 + A5 <= 1$$

$$B3 + A6 <= 1$$

und die Zielfunktion

$$Z = (2\text{-}0.5\text{-}0.5) * A1 + (3{,}2\text{-}0{,}5\text{-}0{,}5) * A2 + (2\text{-}0{,}5\text{+}0{,}5) * A3 + (2\text{+}0{,}5\text{+}0{,}5) * A4 +$$
$$(2\text{+}0{,}5\text{+}0{,}5) * A5 + (2.8\text{+}0{,}5\text{-}0{,}5) * A6 + 1 * B1 + 1 * B2 + 1 * B3 - 3$$

bzw.

$$Z = 1 * A1 + 2{,}2 * A2 + 2 * A3 + 3 * A4 + 3 * A5 + 2{,}8 * A6 + 1 * B1 + 1 * B2 + 1 * B3 - 3$$

Dieses System lässt sich nun z.B. mit dem Simplexalgorithmus lösen. Der bereits normierte, d.h. durch das Gesamtgewicht dividierte, Optimalwert als Maß für die Ähnlichkeit von Bea Wax und B. Wachs ergibt sich zu 0,78.

Zur Motivation der genannten Änderungen betrachten wir die Grenzfälle, in denen die Werte der Variablen "0" oder "1" betragen. Seien A1, A2 zusammenhängende Assoziationen mit dem Wert 2. Der Fragmentabzug sei wieder 0.5. Dann ist

$$Z = (2\text{+}0.5\text{-}0.5) * A1 + (2\text{+}0.5\text{-}0.5) * A2 + (2 * 0.5) * B - 1$$

| A1 | A2 | B | Z = 2 * A1 + 2 * A2 + 1 * B - 1 |
|----|----|----|----|
| 0 | 0 | 1 | 0 |
| 1 | 0 | 0 | 1 |

(fortgesetzt)

| A1 | A2 | B | $Z = 2 * A1 + 2 * A2 + 1 * B - 1$ |
|----|----|----|----|
| 0 | 1 | 0 | 1 |
| 1 | 1 | 0 | 3 |

Wie man in den Zeilen 2 und 3 sieht, ist der Wert der Assoziation um 1 reduziert (Abzug für Fragmentanfang und -ende), da keine zusammenhängende Assoziation ausgewählt wurde. In Zeile 4 treten nur die Fragmentabzüge für die Assoziationskette A1 und A2 auf.

**Referenzen**

[1] The Unicode Consortium. The Unicode Standard, Version 4.0.0, defined by: The Unicode Standard, Version 4.0 (Boston, MA, Addison-Wesley, 2003. ISBN 0-321-18578-1)

[2] State-space search: algorithms, complexity, extensions, and applications / Weixiong Zhang. - New York ; Berlin ; Heidelberg : Springer, 1999. - XVI, (engl.) ISBN: 0-387-98832-7

[3] Hromkovič Juraj; Algorithmics for Hard Problems; Springer, 2003; 2nd Edition; ISBN 3-540-44134-4

[4] Vanderbei, Robert J.; Linear Programming, Foundations and Extensions, Series: International Series in Operations Research & Management Science, Vol. 37, 2nd Edition, 2001, ISBN: 0-7923-7342-1

[5] C. Roos, T. Terlaky, J.-Ph. Vial; Theory and Algorithms for linear Optimization; Wiley; 2001; ISBN 0-471-95676-7

**Patentansprüche**

1. Rechnergestütztes Verfahren zum automatischen Bewerten der Ähnlichkeit von zwei Zeichenketten, die in einem Computer gespeichert sind oder auf die der Computer über eine Schnittstelle Zugriff hat, mit folgenden Schritten:

   • Aufsuchen von in den Zeichenketten vorhandenen Assoziationen nach einer im Computer gespeicherten Vorschrift, wobei eine Assoziation ein Paar von Teilzeichenketten ist, die in den zwei Zeichenketten auftreten oder die in den zwei Zeichenketten auftreten und phonetisch übereinstimmen oder eine übereinstimmende Bedeutung haben, und
   • Bewerten der aufgesuchten Assoziationen nach einer im Computer gespeicherten ersten Regel,

   **dadurch gekennzeichnet, dass**

   • zusammenhängende Assoziationen - nachfolgend auch als Assoziationsketten bezeichnet -, bei denen in beiden Zeichenketten die eine Assoziation dort endet, wo die nächste Assoziation beginnt, für die Ähnlichkeit der Zeichenketten höher bewertet werden als nicht zusammenhängende Assoziationen, und
   • ein Wert, insbesondere ein Zahlenwert, als Maß für die Ähnlichkeit der beiden Zeichenketten von der Bewertung der aufgesuchten Assoziationen nach einer im Computer gespeicherten zweiten Regel abgeleitet wird,
   • wobei der Wert für die Ähnlichkeit der beiden Zeichenketten aus den Werten sich nicht überschneidender Fragmente gebildet wird, wobei ein Fragment eine jede Assoziation und jede beliebige zusammenhängende Assoziation in den zwei Zeichenketten ist und
   • wobei der Wert für die Ähnlichkeit durch das zumindest näherungsweise Lösen eines gewichteten Mengenpackungsproblems gewonnen wird, bei welchem es darum geht, aus der Menge der Fragmente, die sich mit den beiden Zeichenketten bilden lassen, eine Auswahl von sich nicht überschneidenden Fragmenten zu finden, die eine bestmögliche Wertzahl für die Ähnlichkeit der beiden Zeichenketten insgesamt ergeben.

2. Verfahren nach Anspruch 1, **dadurch gekennzeichnet, dass** längere Assoziationsketten höher bewertet werden als kürzere Assoziationsketten.

3. Verfahren nach einem der vorstehenden Ansprüche, **dadurch gekennzeichnet, dass** die zu vergleichenden Zeichenketten für die Bewertung ihrer Ähnlichkeit aus möglichst wenigen Fragmenten und zum Rest aus Zeichen zusammengesetzt werden, aus welchen sich keine Assoziationen mehr bilden lassen.

**4.** Verfahren nach einem der vorstehenden Ansprüche, **dadurch gekennzeichnet, dass** jeder Assoziation als Maß für die Ähnlichkeit ihrer assoziierten Bestandteile ein Zahlenwert zugeordnet wird.

**5.** Verfahren nach Anspruch 4, **dadurch gekennzeichnet, dass** die Assoziationen gemäß ihrer Bedeutung für die Ähnlichkeit von Zeichenketten gewichtet werden.

**6.** Verfahren nach einem der vorstehenden Ansprüche, **dadurch gekennzeichnet, dass** Zeichen, die in unterschiedlichen Zeichensätzen die gleiche phonetische, symbolische oder inhaltliche Bedeutung haben oder haben können, als gleich oder ähnlich aufgefasst werden.

**7.** Verfahren nach einem der Ansprüche 4 bis 6, **dadurch gekennzeichnet, dass** in den Zeichenketten enthaltene Assoziationsketten unter Berücksichtigung der Werte der in ihnen enthaltenen Assoziationen bewertet werden.

**8.** Verfahren nach Anspruch 7, **dadurch gekennzeichnet, dass** der Wert eines Fragments in Abhängigkeit von seiner Stellung in der Zeichenkette erhöht oder erniedrigt wird.

**9.** Verfahren nach einem der vorstehenden Ansprüche, **dadurch gekennzeichnet, dass** zur Bewertung der Ähnlichkeit der Zeichenketten die Summe der Werte der gemäß Anspruch 2 oder Anspruch 3 ausgewählten Fragmente bzw. Assoziationen und Assoziationsketten summiert wird.

**10.** Verfahren nach Anspruch 9, **dadurch gekennzeichnet, dass** die Summe der Werte der Fragmente so normiert wird, dass sie bei übereinstimmenden Zeichenketten einen festen Wert erhält.

**11.** Verfahren nach einem der vorstehenden Ansprüche, **dadurch gekennzeichnet, dass** die Ähnlichkeit zweier Zeichenketten nach einem Verfahren der linearen Optimierung berechnet wird, indem das Maximum der die Ähnlichkeit der Zeichenketten angebenden Wertzahl aufgesucht wird, welches sich aus der Randbedingung ergibt, dass kein Zeichen der zu vergleichenden Zeichenketten mehr als einem Fragment angehören darf.

**12.** Verfahren nach Anspruch 11, **dadurch gekennzeichnet, dass** in das System der linearen Gleichungen Randbedingungen und/oder Variablen für den Fall eingeführt werden, dass in den Zeichenketten eine oder mehrere Assoziationsketten vorhanden sind.

**13.** Verfahren nach Anspruch 12, **dadurch gekennzeichnet, dass** in das System der linearen Gleichungen eine Randbedingungen und/oder Variablen für den Fall eingeführt wird, dass ein Fragment den Anfang oder das Ende eines Wortes bildet.

**14.** Verfahren nach einem der Ansprüche 11 bis 13, **dadurch gekennzeichnet, dass** ein Iterationsverfahren, welches von unten bzw. oben zur Lösung des linearen Optimierungsproblems konvergiert, abgebrochen wird, wenn der Zahlenwert der Ähnlichkeit einen Schwellenwert erreicht oder überschritten bzw. unterschritten hat.

**15.** Verfahren nach einem der vorstehenden Ansprüche, **dadurch gekennzeichnet, dass** die in einer Zeichenkette vorhandenen Positionen von Zeichen fortlaufend durchnummeriert werden, sodass für jedes Zeichen einer Zeichenkette eine Positionsnummer seine Position in der Zeichenkette eindeutig angibt, und dass für die Ermittlung der Ähnlichkeit zweier Zeichenketten die vorhandenen Zeichen den Positionen zugeordnet werden, welche die Zeichen in den beiden Zeichenketten einnehmen, und dass insbesondere die Fragmente den Positionen zugeordnet werden, welche die die Fragmente bildenden Zeichen in den beiden Zeichenketten einnehmen, und dass die Positionen entsprechend bewertet werden.

**16.** Verfahren nach einem der vorstehenden Ansprüche, **dadurch gekennzeichnet, dass** in einer ersten Datenmenge ein erster Datensatz, welcher eine erste von zwei Zeichenketten enthält, die einander nach einem vorgegebenen Kriterium ähnlich sind, um Daten aus einem zweiten Datensatz ergänzt wird, welcher die zweite der beiden ähnlichen Zeichenketten enthält und in einer zweiten Datenmenge enthalten ist.

**17.** Verfahren nach einem der vorstehenden Ansprüche, **dadurch gekennzeichnet, dass** eine erste Datenmenge oder ein erster Datensatz und eine zweite Datenmenge bzw. ein zweiter Datensatz in Zeichenketten zerlegt werden, dass die Zeichenketten der ersten Datenmenge bzw. des ersten Datensatzes und die Zeichenketten der zweiten Datenmenge bzw. des zweiten Datensatzes paarweise miteinander verglichen werden, um Zeichenketten aufzufinden, die einander nach einem vorgegebenen Kriterium ähnlich sind, und dass Zeichenketten der zweiten Datenmenge, die mit keiner der Zeichenketten der ersten Datenmenge nach dem vorgegebenen Kriterium ähnlich sind, oder Datensätze, die Zeichenketten enthalten, die mit keiner der Zeichenketten der ersten Datenmenge nach dem vorgegebenen Kriterium ähnlich sind in die erste Datenmenge aufgenommen werden.

18. Verfahren nach einem der vorstehenden Ansprüche, **dadurch gekennzeichnet, dass** von zwei Zeichenketten einer Datenmenge, die nach einem vorgegebenen Kriterium als einander ähnlich bewertet worden sind, eine Zeichenkette aus der Datenmenge entfernt wird.

19. Verwendung des Verfahrens nach einem der vorstehenden Ansprüche zur fehlertoleranten Suche nach einer vorgegebenen Zeichenkette oder nach einem Datensatz, der die vorgegebene Zeichenkette enthält, in einer Datenmenge.

## Claims

1. Computer-aided method for automatically rating the similarity of two character strings which are stored in a computer or to which the computer has access via an interface, having the following steps:

    • associations present in the character strings are sought on the basis of a specification stored in the computer, wherein an association is a pair of character string elements which occur in the two character strings or which occur and phonetically match or have a matching significance in the two character strings, and
    • the sought associations are rated on the basis of a first rule stored in the computer,
    **characterized in that**
    • contiguous associations - subsequently also referred to as association strings - in which one association ends where the next association begins in both character strings are rated more highly for the similarity of the character strings than non-contiguous associations, and
    • a value, particularly a numerical value, is derived as a measure of the similarity of the two character strings from the rating of the sought associations on the basis of a second rule stored in the computer,
    • wherein the value for the similarity of the two character strings is formed from the values of nonintersecting fragments, wherein a fragment is each association and any contiguous association in the two character strings, and
    • wherein the value for the similarity is obtained by at least approximately solving a weighted set-packing problem which involves taking the set of the fragments which can be formed with the two character strings and finding a selection of nonintersecting fragments which give the best possible value numeral for the similarity of the two character strings overall.

2. Method according to Claim 1, **characterized in that** longer association strings are rated more highly than shorter association strings.

3. Method according to either of the preceding claims, **characterized in that** the character strings to be compared in order to rate their similarity are compiled from as few fragments as possible and otherwise from characters from which no further associations can be formed.

4. Method according to one of the preceding claims, **characterized in that** each association is allocated a numerical value as a measure of the similarity of the associated parts of said association.

5. Method according to Claim 4, **characterized in that** the associations are weighted on the basis of their significance for the similarity of character strings.

6. Method according to one of the preceding claims, **characterized in that** characters which have or can have the same phonetic, symbolic or content-related significance in different character sets are regarded as the same or similar.

7. Method according to one of Claims 4 to 6, **characterized in that** association strings contained in the character strings are rated by taking account of the values of the associations contained in said association strings.

8. Method according to Claim 7, **characterized in that** the value of a fragment is raised or lowered on the basis of the position of said fragment in the character string.

9. Method according to one of the preceding claims, **characterized in that** the similarity of the character strings is rated by summing the sum of the values of the fragments or associations and association strings selected according to Claim 2 or Claim 3.

10. Method according to Claim 9, **characterized in that** the sum of the values of the fragments is normalized such that it is provided with a fixed value in the event of matching character strings.

11. Method according to one of the preceding claims, **characterized in that** the similarity of two character strings is calculated on the basis of a method of linear optimization by seeking the maximum of the value numeral indicating the similarity of the character strings, which maximum arises from the constraint that no character in the character strings to be compared may be associated with more than one fragment.

12. Method according to Claim 11, **characterized in that** the system of linear equations has constraints and/or variables introduced into it for the case in which the character strings contain one or more association strings.

13. Method according to Claim 12, **characterized in that** the system of linear equations has constraints and/or variables introduced into it for the case in which a fragment forms the start or the end of a word.

14. Method according to one of Claims 11 to 13, **characterized in that** an iteration method which converges from the bottom or the top in order to solve the linear optimization problem is aborted when the numerical value of the similarity has reached or exceeded or fallen below a threshold value.

15. Method according to one of the preceding claims, **characterized in that** the character positions present in a character string are numbered consecutively, with the result that for each character in a character string a position number explicitly indicates the position of said character in the character string, and **in that** for the ascertainment of the similarity of two character strings the characters present are allocated to the positions which the characters adopt in the two character strings, and **in that** particularly the fragments are allocated to the positions which the characters forming the fragments adopt in the two character strings, and **in that** the positions are rated accordingly.

16. Method according to one of the preceding claims, **characterized in that** in a first volume of data a first data record, which contains a first of two character strings which are similar to one another on the basis of a prescribed criterion, is augmented by data from a second data record, which contains the second of the two similar character strings and is contained in a second volume of data.

17. Method according to one of the preceding claims, **characterized in that** a first volume of data or a first data record and a second volume of data or a second data record are broken down into character strings, **in that** the character strings in the first volume of data or in the first data record and the character strings in the second volume of data or in the second data record are compared with one another in pairs in order to find character strings which are similar to one another on the basis of a prescribed criterion, and **in that** character strings in the second volume of data which are similar to none of the character strings in the first volume of data on the basis of the prescribed criterion, or data records which contain character strings which are similar to none of the character strings in the first volume of data on the basis of the prescribed criterion, are included in the first volume of data.

18. Method according to one of the preceding claims, **characterized in that** one character string from two character strings that have been rated as similar to one another on the basis of a prescribed criterion in a volume of data is removed from the volume of data.

19. Use of the method according to one of the preceding claims for the error-tolerant search for a prescribed character string or for a data record which contains the prescribed character string in a volume of data.

**Revendications**

1. Procédé informatisé destiné à évaluer automatiquement la ressemblance de deux chaînes de caractères qui sont stockées dans un ordinateur ou auxquelles l'ordinateur a accès par l'intermédiaire d'une interface, comportant les étapes suivantes :

- rechercher des associations présentes dans les chaînes de caractères conformément à une instruction stockée dans l'ordinateur, une association étant une paire de chaînes de caractères partielles qui apparaissent dans les deux chaînes de caractères ou qui apparaissent dans les deux chaînes de caractères et concordent phonétiquement ou ont une importance concordante, et

- évaluer les associations recherchées conformément à une première règle stockée dans l'ordinateur, **caractérisé en ce que**
- des associations contiguës - également désignées ci-après chaînes d'association -, dans lesquelles ladite association se termine dans les deux chaînes de caractères là où commence l'association suivante, sont évaluées à des valeurs plus élevées, pour la ressemblance des chaînes, que les associations non contiguës, et
- une valeur, notamment une valeur numérique, est déduite en tant que mesure de la ressemblance des deux chaînes de caractères par l'évaluation des associations recherchées conformément à une seconde règle stockée dans l'ordinateur,
- dans lequel la valeur de la ressemblance des deux chaînes de caractères est construite à partir des valeurs de fragments ne se chevauchant pas, un fragment étant chaque association et chaque association contiguë quelconque présentes dans les deux chaînes de caractères, et
- dans lequel la valeur de la ressemblance est obtenue par résolution au moins approximative d'un problème de remplissage d'ensemble pondéré consistant à trouver, au sein dudit ensemble de fragments qui peuvent être formés au moyen des deux chaînes de caractères, une sélection de fragments ne se chevauchant pas et conduisant globalement à la meilleure valeur numérique possible de la ressemblance des deux chaînes de caractères.

2. Procédé selon la revendication 1, **caractérisé en ce que** des chaînes d'association plus longues ont des valeurs plus élevées que des chaînes d'association plus courtes.

3. Procédé selon l'une quelconque des revendications précédentes, **caractérisé en ce que** les chaînes de caractères à comparer pour évaluer leur ressemblance sont assemblées à partir du plus petit nombre possible de fragments et, pour le reste, sont assemblées à partir de caractères qui ne permettent plus de former d'associations.

4. Procédé selon l'une quelconque des revendications précédentes, **caractérisé en ce qu'**une valeur numérique est affectée à chaque association en tant que mesure de la ressemblance de leurs parties constitutives associées.

5. Procédé selon la revendication 4, **caractérisé en ce que** les associations sont pondérées en fonction de leur importance pour la ressemblance des chaînes de caractètres.

6. Procédé selon l'une quelconque des revendications précédentes, **caractérisé en ce que** des caractères qui ont ou peuvent avoir dans des jeux de caractères différents la même importance phonétique, symbolique ou de contenu, sont considérés comme étant identiques ou semblables.

7. Procédé selon l'une quelconque des revendications 4 à 6, **caractérisé en ce que** des chaînes d'association contenues dans les chaînes de caractères sont évaluées en tenant compte des valeurs des associations qu'elles contiennent.

8. Procédé selon la revendication 7, **caractérisé en ce que** la valeur d'un fragment augmente ou diminue en fonction de sa position dans la chaîne de caractères.

9. Procédé selon l'une quelconque des revendications précédentes, **caractérisé en ce que**, pour évaluer la ressemblance des chaînes de caractères, on calcule la somme des valeurs des fragments ou des associations et des chaînes d'association sélectionnés selon la revendication 2 ou la revendication 3.

10. Procédé selon la revendication 9, **caractérisé en ce que** la somme des valeurs des fragments est normalisée de telle sorte qu'elle ait une valeur fixe pour des chaînes de caractères concordantes.

11. Procédé selon l'une quelconque des revendications précédentes, **caractérisé en ce que** la ressemblance de deux chaînes de caractères est calculée selon un procédé d'optimisation linéaire consistant à rechercher le maximum de la valeur numérique représentant la ressemblance des chaînes de caractères, qui résulte de la condition aux limites selon laquelle aucun caractère des chaînes de caractères à comparer ne peut appartenir à plus d'un fragment.

12. Procédé selon la revendication 11, **caractérisé en ce que** des conditions aux limites et/ou des variables sont introduites dans le système d'équations linéaires pour le cas où une ou plusieurs chaînes d'association sont présentes dans les chaînes de caractères.

**13.** Procédé selon la revendication 12, **caractérisé en ce que** des conditions aux limites et/ou des variables sont introduites dans le système d'équations linéaires pour le cas où un fragment forme le début ou la fin d'un mot.

**14.** Procédé selon l'une quelconque des revendications 11 à 13, **caractérisé en ce qu'**une itération, qui converge du bas ou du haut vers la solution du problème d'optimisation linéaire, est interrompue lorsque la valeur numérique de la ressemblance a atteint ou franchi en sens croissant ou décroissant une valeur de seuil.

**15.** Procédé selon l'une quelconque des revendications précédentes, **caractérisé en ce que** les positions de caractères présents dans une chaîne de caractères sont numérotées en ordre croissant afin que, pour chaque caractère d'une chaîne de caractères, un numéro de position indique sa position dans la chaîne de caractères et **en ce que**, pour déterminer la ressemblance de deux chaînes de caractères les caractères présents sont affectés aux positions occupées par les caractères dans les deux chaînes de caractères, et en particulier, **en ce que** les fragments sont affectés aux positions occupées par les caractères formant les fragments dans les deux chaînes de caractères, et **en ce que** les positions sont évaluées en conséquence.

**16.** Procédé selon l'une quelconque des revendications précédentes, **caractérisé en ce que**, dans un premier ensemble de données, un premier jeu de données contenant une première de deux chaînes de caractères semblables l'une à l'autre selon un critère prédéterminé, est complété par des données provenant d'un second jeu de données qui contient les secondes des deux chaînes de caractères semblables et qui est contenu dans un second ensemble de données.

**17.** Procédé selon l'une quelconque des revendications précédentes, **caractérisé en ce qu'**un premier ensemble de données ou un premier jeu de données et un second ensemble de données ou un second jeu de données sont décomposés en des chaînes de caractères, **en ce que** les chaînes de caractères du premier ensemble de données ou du premier jeu de données et les chaînes de caractères du second ensemble de données ou du second jeu de données sont comparées les unes aux autres deux à deux afin de trouver des chaînes de caractères qui sont semblables les unes aux autres selon un critère prédéterminé, et **en ce que** les chaînes de caractères du second ensemble de données qui ne sont semblables à aucune des chaînes de caractères du premier ensemble de données selon le critère prédéterminé, ou des jeux de données contenant des chaînes de caractères qui ne sont semblables à aucune des chaînes de caractères du premier ensemble de données selon le critère prédéterminé, sont incluses dans le premier ensemble de données.

**18.** Procédé selon l'une quelconque des revendications précédentes, caractérisé en en ce que, parmi deux chaînes de caractères d'un ensemble de données qui ont été évaluées selon un critère prédéterminé comme étant semblables l'une à l'autre, une chaîne de caractères est supprimée de l'ensemble de données.

**19.** Utilisation du procédé selon l'une quelconque des revendications précédentes pour effectuer une recherche à tolérance de panne d'une chaîne de caractères prédéterminée ou d'un jeu de données qui contient la chaîne de caractères prédéterminée dans un ensemble de données.

Fig. 1

**EP 2 035 965 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0890911 A2
- EP 0271664 A1
- EP 0639814 B1

**In der Beschreibung aufgeführte Nicht-Patentliteratur**

- The Unicode Consortium. The Unicode Standard. Addison-Wesley, 2003
- **WEIXIONG ZHANG.** State-space search: algorithms, complexity, extensions, and applications. Springer, 1999
- **JURAJ.** Algorithmics for Hard Problems. Springer, 2003
- Linear Programming, Foundations and Extensions, Series: International Series. **VANDERBEI, ROBERT J.** Operations Research & Management Science. 2001, vol. 37
- **C. ROOS ; T. TERLAKY ; J.-PH. VIAL.** Theory and Algorithms for linear Optimization. Wiley, 2001